# EUROPEAN PATENT SPECIFICATION

(11) **EP 3 097 133 B1**
(45) Date of publication and mention of the grant of the patent: **20.02.2019**
(21) Application number: 14721483.7
(22) Date of filing: 21.01.2014
(51) Int. Cl.: C08G 63/08, C08L 67/04

(54) **THERMOFORMED ARTICLE COMPRISING POLYLACTIC ACID WITH D-LACTIDE AND PROCESS OF MAKING THE SAME**
WARMGEFORMTER ARTIKEL MIT POLYMILCHSÄURE MIT D-LACTID UND VERFAHREN ZUR HERSTELLUNG DAVON
ARTICLE THERMOFORMÉ COMPRENANT DE L'ACIDE POLYLACTIQUE AVEC DU D-LACTIDE ET PROCÉDÉ DE FABRICATION DE CET ARTICLE

(43) Date of publication of application: 30.11.2016
(73) Proprietor: Compagnie Gervais Danone, 75009 Paris (FR)
(72) Inventor: CHIVRAC, Frédéric, F-92120 Montrouge (FR)
(74) Representative: Cabinet Plasseraud
(86) International application number: PCT/IB2014/000126
(87) International publication number: WO 2015/110854

(56) References cited:
- EP-B1- 1 577 346
- WO-A1-2013/131649
- WO-A2-2006/002409
- US-B1- 8 182 734

## Description

The invention concerns an article in a material comprising polylactic acid, said article comprising a thermoformed part. The material has L-Lactide units and D-Lactide units.

Polylactic Acid (PLA) is a thermoplastic polymer made from renewable resources. It has a significant biodegradability. PLA plastic sheets are used to make thermoformed containers, such as cups, for example yogurt cups.

Thermoforming is performed by applying a plug to force a heated material into a mold cavity. During thermoforming the material is stretched and the initial thickness of the material is reduced. Higher form factors (deepness dimension / section dimension) of thermoformed articles are obtained with higher stretch ratios. Mechanical properties of the stretched zone decrease as the thickness decreases. Stretching inhomogeneity can also be a source of mechanical properties degradations by generating local defaults. There is a need in articles made with PLA with significant form factors and/or stretch ratios, while presenting good mechanical properties, for example due to good thickness profiles and/or due to good homogeneity after stretching.

Thermoforming PLA materials comprising L-Lactide units and D-Lactide units has been described. For example "Processing technologies for poly(lactic acid)", L.-T. Lim, Progress in Polymer Science 33 (2008) 820-852, discloses that PLA resins of higher D-isomer contents (4-8%) are more suitable for thermoforming (page 822). Meanwhile the same article discloses on figure 8 the effect on crystallinity, at concentrations of D-Lactide units of from 1.8% to 7.2%, when drawing a biaxially stretched PLA at 80°C to draw ratios up-to 4 in an experimental setting that does not correspond to thermoforming. There is a need for thermoformed articles and thermoforming process with higher stretching and/or with higher form factors.

Document EP1577346B1 disclosed blends of PLA polymers having various D-Lactide units amounts, properties of the blends, and thermoforming. Paragraphs [0103] and [0104] disclose thermoforming a bi-oriented sheet of 300 µm in a mold having a diameter of 100 mm and being 30 mm deep. This corresponds to a cylinder with a total stretch ratio of 2.2. Thermoformed articles obtained from polylactic acid compositions comprising both D- and L-lactide units are also known from US8182734.

There is a need for thermoformed articles and thermoforming process with higher stretching and/or with higher form factors.

There is also a need for articles that can be made with higher productivity processes.

The invention addresses at least one of the problems or needs above with an article in a material comprising polylactic acid, said article comprising a thermoformed part, wherein:
- the material comprises polylactic acid having D-Lactide units and L-Lactide units, as a copolymer and/or blend, with a ratio between D-Lactide units and L-Lactide units of from 5/95 to 10/90,
- the thermoformed part comprises at least one zone wherein the local stretch ratio is of at least 5, preferably at least 6, preferably at least 7.

It has been surprisingly found that the articles and/or the process of the invention allow good mechanical properties such as compression resistance and/or good thickness profiles, and/or good homogeneity and/or control of thickness profiles and/or good other properties such as banderoles adhesion.

Without being bound to any theory it is believed that the D-Lactide units help to control the thermoforming of the PLA at higher stretch ratios, this resulting in improved properties mentioned above. PLA is a semi-crystalline polymer. It means that above its glass transition temperature, an initial neat PLA product, such as a neat PLA sheet, which is originally almost entirely amorphous, can crystallize. It is believed that during a thermoforming process, such crystallization is accelerated by stretching upon the action of a plug, which orientates the macromolecular chains and induce the formation of PLA crystals. This generates an increase of the PLA elongation viscosity, known as strain hardening. Depending on the localization within the thermoformed part of the article, the chain orientation can vary. PLA in direct contact with the plug is not significantly stretched, and thus remains almost amorphous. On the opposite, in the middle the thermoformed part of the article, the stretching is high, leading to a strong orientation of the chains, and resulting in a high crystallinity. Such variations complicate the control of the process and result in quite uncontrolled thickness profiles, with some possible defects. Moreover, the higher the stretching ratio, the more complicated the control of the thermoforming process is. In the thermoformed articles with quite high stretch ratios the strain hardening is very significant. As a consequence, with such high stretch ratios, it is difficult to obtain a significant amount of PLA material at the bottom of the article, and this results in low mechanical resistance. It has been found that thanks to the D-Lactide units, PLA crystallization is more homogeneous and lower compared to neat PLA, whatever the stretching ratio. As a consequence, it leads to a more controlled thermoforming process, with good control of the thickness profile, and thus it leads to improved mechanical performance.

### Definitions

In the present application a non-foamed polylactic acid (PLA) material refers to polylactic acid substantially depleted of gas inclusions, either directly in the PLA or in microspheres embedded in the PLA. Non-foamed PLA has typically a density of higher than 1.2. Non-foamed PLA is also referred to as "compact PLA".

In the present application a foamed polylactic acid (PLA) material refers to polylactic acid comprising gas inclusions, preferably directly in the PLA, typically as opposed to gas inclusions in microspheres embedded in the PLA. Foamed PLA has typically a density of up to 1.2, preferably of at less than 1.2, preferably of up to 1.1.

In the present application "additives" refer to products that can be added to polylactic acid or other thermoplastic materials.

In the present application the "total stretch ratio" refers to the ratio between the surface of the article opening, corresponding to the thermoforming area of a sheet, and the surface of the developed thermoformed part, corresponding to the surface of the plastic in contact with a mold.

In the present application the "local stretch ratio" or "local draw ratio" refers to the stretch ratio at a local zone of the thermoformed part. The local stretch ratio can be estimated by dividing the local thickness in the thermoformed part by the initial thickness before thermoforming. Non thermoformed parts, such as flanges, typically have this initial thickness.

In the present application a "stereocomplex" refers to a complex organized structure of a L-Lactide homopolymer and a D-Lactide homopolymer having a crystalline structure that the melting temperature is of more than 210°C. PLA materials that are different from a stereocomplex typically have a melting temperature of 150°C-180°C.

### Material structure

The material can have a single layer structure or a multi-layers structure, for example a bi-layer structure. Such structures are typically obtained by thermoforming corresponding single layer sheets or multi-layers sheets.

The material can have for example a structure having a first layer comprising the polylactic acid and the mineral filler, and a second layer comprising a thermoplastic, preferably polylactic acid and being substantially free of mineral filler. Such arrangements of layers are typically appropriate for articles to be used in contact with food. The weight ratio between the layers can be for example of from 1/99 to 50/50, preferably from 5/95 to 20/80, preferably from 10/90 to 30/70.

The material can be a foamed polylactic acid material or a non-foamed polylactic acid material. In a particular embodiment the material is a non-foamed polylactic acid material.

It is mentioned that the material can comprise a non polylactic acid masterbatch polymer, preferably polyethylene, or Ethylene-Vinyl Acetate. The material can comprise further additives.

### Polylactic Acid material

The material of the article comprises polylactic acid having D-Lactide units and L-Lactide units, as a copolymer and/or blend, with a ratio between D-Lactide units and L-Lactide units of from 5/95 to 10/90. As the D-Lactide units or monomers and the L-Lactide units or monomers have the same molecular weight, the ratios by weight and the ratios by number are considered herein as identical.

For example the ratio can be of from 5/95 to 6/94, or from 6/96 to 7/93, or from 7/93 to 8/92, or from 8/92 to 9/91, or from 9/91 to 10/90.

It is mentioned that the polylactic acid is preferably different from a stereocomplex.

Polylactic Acid (PLA) polymers are known by the one skilled in the art. These are typically obtained by polymerization of lactic acid monomers, in an L-Lactide form and/or in a D-Lactide form. The lactic acid monomers are typically obtained by a microbiological process, involving micro-organisms such as bacteria. Polylactic Acid (PLA) polymers with various ratios between D-Lactide units and L-Lactide units are commercially available. Examples of PLA polymers include for example Ingeo® 2003D and Ingeo® 4060D, both marketed by NatureWorks.

In one embodiment the polylactic acid is a copolymer having D-Lactide units and L-Lactide units in the ratios mentioned above. Such copolymers are typically obtained by copolymerizing D-Lactide monomers and L-Lactide monomers in the ratios mentioned above. Preferably the copolymers do not comprise more than 10% by weight, preferably 7.5%, preferably 5%, preferably 2.5%, preferably 1%, preferably 0.5%, preferably 0.1%, of units different from L-Lactide and D-Lactide units.

In one embodiment the polylactic acid is a blend of at least a first polylactic acid polymer and at least a second polylactic acid polymer. The first polylactic acid polymer comprises L-Lactide and optionally D-Lactide units. The second polylactic acid comprises D-Lactide units and L-Lactide units. The blend is such that the ratios between D-Lactide units comprised in all the polylactic acid polymers of the blend and the L-Lactide units comprised in all the polylactic acid polymers of the blend are in the ranges mentioned above. Typically the at least first polylactic acid polymer and the at least second polylactic acid polymer are mixed in amounts appropriate to obtain the ratios mentioned above. The blend can be obtained by mixing and melting the polymers, typically upon extruding a sheet. The ratios by weight between the first and second polymers can be from example of from 1/99 to 99/1, preferably from 10/90 to 90/10, preferably from 20/80 to 90/10, preferably from 34/66 to 80/20.

In one embodiment one implements a blend of a first polylactic acid polymer having less 4% units of D-Lactide and more than 96% units of L-Lactide, and a second polylactic acid polymer having from 4% to 80%, preferably 4% to 50%, preferably 4% to 20%, preferably 8% to 15%, units of D-Lactide and from 20% to 96%, preferably 50% to 96%, preferably 80% to 96%, preferably 85% to 92%, units of L-Lactide. In one embodiment the second polylactic acid polymer is present in an amount of less than 50% of the first polylactic acid polymer.

### Impact modifier

The material can comprise at least one impact modifier. Such compounds are known by the one skilled in the art, and available on the market as such. They typically modify the mechanical properties of thermoplastics by increasing the tensile stress of said thermoplastics. Various mechanisms can be involved, such as cavitation upon impact or diffused energy released upon impact. Compounds that have such properties are typically appropriate. Examples of impact modifiers include alkyl sulfonates, aromatic-aliphatic polyesters, poly(butylene adipate-co-terephthalate), for example those described in document EP 2065435, ethylene copolymers, for example described in document WO 2011119639, Acetyl TriButyl citrate, Triethyl citrate, Polybutylene Succinate, PolyVinyl Alcohol (PVA), ethylene vinyl acetate, hydrogenated soil oil.

In a preferred embodiment the impact modifier is a core/shell polymeric compound or an alkyl sulfonate compound.

In a preferred embodiment the material comprises from 0.01% to 20% by weight of impact modifier, preferably from 0.1% to 10%, preferably from 0.5 to 5%.

Impact modifiers can be added in the form of masterbatches, wherein the impact modifier is dispersed in a polymer matrix, for example PLA or a polymer of ethylenically unsaturated monomers, such as an ethylene vinyl acetate copolymer.

The core-shell polymeric compound, also referred to as core-shell copolymer, is typically in the form of fine particles having an elastomer core and at least one thermoplastic shell, the particle size being generally less than 1 micron and advantageously between 150 and 500 nm, and preferably from 200 nm to 450 nm. The core-shell copolymers may be monodisperse or polydisperse.

By way of example of the core, mention may be made of isoprene homopolymers or butadiene homopolymers, copolymers of isoprene with at most 3 mol % of a vinyl monomer and copolymers of butadiene with at most 35 mol % of a vinyl monomer, and preferably 30 mol % or less. The vinyl monomer may be styrene, an alkylstyrene, acrylonitrile or an alkyl(meth)acrylate. Another core family consists of the homopolymers of an alkyl (meth)acrylate and the copolymers of an alkyl(meth)acrylate with at most 35 mol % of a vinyl monomer, and preferably 30 mol % or less. The alkyl(meth)acrylate is advantageously butyl acrylate. Another alternative consists in an all acrylic copolymer of 2-octylacrylate with a lower alkyl acrylate such as n-butyl-, ethyl-, isobutyl- or 2-ethylhexyl- acrylate. The alkyl acrylate is advantageously butyl acrylate or 2-ethylhexylacrylate or mixtures thereof. According to a more preferred embodiment, the comonomer of 2-octylacrylate is chosen among butyl acrylate and 2-ethylhexyl acrylate. The vinyl monomer may be styrene, an alkylstyrene, acrylonitrile, butadiene or isoprene. The core of the copolymer may be completely or partly crosslinked. All that is required is to add at least difunctional monomers during the preparation of the core; these monomers may be chosen from poly(meth)acrylic esters of polyols, such as butylene di(meth)acrylate and trimethylolpropane trimethacrylate. Other difunctional monomers are, for example, divinylbenzene, trivinylbenzene, vinyl acrylate and vinyl methacrylate. The core can also be crosslinked by introducing into it, by grafting, or as a comonomer during the polymerization, unsaturated functional monomers such as anhydrides of unsaturated carboxylic acids, unsaturated carboxylic acids and unsaturated epoxides. Mention may be made, by way of example, of maleic anhydride, (meth)acrylic acid and glycidyl methacrylate.

The shells are typically styrene homopolymers, alkylstyrene homopolymers or methyl methacrylate homopolymers, or copolymers comprising at least 70 mol % of one of the above monomers and at least one comonomer chosen from the other above monomers, vinyl acetate and acrylonitrile. The shell may be functionalized by introducing into it, by grafting or as a comonomer during the polymerization, unsaturated functional monomers such as anhydrides of unsaturated carboxylic acids, unsaturated carboxylic acids and unsaturated epoxides. Mention may be made, for example, of maleic anhydride, (meth)acrylic acid and glycidyl methacrylate. By way of example, mention may be made of core-shell copolymers (A) having a polystyrene shell and core-shell copolymers (A) having a PMMA shell. The shell could also contain functional or hydrophilic groups to aid in dispersion and compatibility with different polymer phases. There are also core-shell copolymers (A) having two shells, one made of polystyrene and the other, on the outside, made of PMMA. Examples of copolymers (A) and their method of preparation are described in the following U.S. Pat. No. 4,180,494, U.S. Pat. No. 3,808,180, U.S. Pat. No. 4,096,202, U.S. Pat. No. 4,260,693, U.S. Pat. No. 3,287,443, U.S. Pat. No. 3,657,391, U.S. Pat. No. 4,299,928 and U.S. Pat. No. 3,985,704.

The core / shell ratio can be for example in a range between 10/90 and 90/10, more preferably 40/60 and 90/10 advantageously 60/40 to 90/10 and most advantageously between 70/30 and 95/15.

Examples of appropriate core/shell impact modifiers include Biostrength ranges, for example Biostrength 150, marketed by Arkema.

### Further Additives

The material can comprise further additives. Herein further additives are understood as compounds different from impact modifiers. Additives that can be used include for example:
- mineral fillers,
- aspect modifiers, such as pigments or colorants,
- stabilizers,
- lubricants,
- mixtures or associations thereof.

Pigments can be for example TiO₂ pigments, for example described in document WO 2011119639.

Mineral fillers can be for example calcium carbonates of natural or synthetic origin, magnesium carbonate, zinc carbonate, mixed salts of magnesium and calcium such as dolomites, limestone, magnesia, barium sulfate, calcium sulfates, magnesium and aluminum hydroxides, silica, wollastonite, clays and other silica-alumina compounds such as kaolins, silico-magnesia compounds such as talc, mica, solid or hollow glass beads, metallic oxides such as zinc oxide, iron oxides, titanium oxide and, more particularly, those selected from natural or precipitated calcium carbonates such as chalk, calcite.

The further additives can be added in the form of masterbatches, wherein the additive is dispersed in a polymer matrix, for example PLA or a polymer of ethylenically unsaturated monomers, such as an ethylene vinyl acetate copolymer.

Further additives, if present, in the material can be typically present in an amount of 0.1% to 15% by weight, for example in an amount of 1% to 10% by weight.

### Article structure

The article of the invention comprises a thermoformed part. The thermoformed part comprises at least one zone wherein the local stretch ratio is of at least 5, preferably at least 6, preferably at least 7. Preferably the thermoformed part has de total stretch ratio of at least 2.5, preferably at least 3, preferably at least 4, preferably at least 5.

The article can comprise a part that has not undergone any stretch, said part being considered herein as a non-thermoformed part. The article can be typically obtained by thermoforming a plastic sheet in the material.

The thermoforming is a process known by the one skilled in the art. It typically comprises stretching under heating a plastic material such as a sheet, typically by applying in a mold cavity mechanical means such as plugs and/or by aspiration. The mechanical means can optionally be enhanced by applying a gas under pressure. The stretching results in local stretch ratios in zones forming the thermoformed part. If the stretching is uniform the local stretch ratios are equal everywhere. As the stretching is typically non uniform, the thermoformed part typically presents various zones having different local stretch ratios.

The thermoformed part of the article can have a thickness varying in a range of from 50 µm to 800 µm, preferably from 60 µm to 750 µm, preferably from 70 µm to 500 µm.

The material and process finds particular interest in articles presenting at least one or several of the following features:
- the article is a container (1) having a hollow body (2) and optionally at least one flange (10), the hollow body defining said thermoformed part, the hollow body being provided with an opening (8);
- in this embodiment the hollow body (2) is at least partially covered by a banderole;
- the hollow body (2) comprises:
   - a bottom (3) at the opposite from the opening (8),
   - a side wall (2a) presenting at least a portion, preferably a lower portion (13), that is not covered by a banderole (18);
- the opening (8) is a generally circular opening and the bottom (3) has a generally circular outer edge;
- the side wall (2a) has a generally cylindrical upper portion (12) having a height h2 and a lower portion (13) having a height h1, tapering from the upper portion toward the bottom (3) in a curved manner, the upper portion and the lower portion intersecting and interconnecting at a peripheral intersection line;
- the bottom (3) is a planar bottom, and wherein the peripheral intersection line is spaced at a substantially constant distance from the planar bottom, the lower portion (13) having a height h1 corresponding to a minoritary fraction of the height H of the container (1);
- the height h2 of said upper portion (12) is constant, the ratio h2/H being comprised between 3:5 and 6:7, and preferably between 2:3 and 4:5;
- the ratio h2/H is inferior or equal to 3:4;
- the side wall (2a) has a thickness profile such that the average thickness of the lower portion (13) is superior to the average thickness of the upper portion (12); and/or
- the opening (8) has an inner diameter which is inferior to the height H of the container (1) and superior to the height h1 of the lower portion (13).

It is mentioned that articles having a lower portion that is not covered by a banderole and are particularly challenging articles as to manufacture, homogeneity and/or mechanical properties, where the use of the mineral filler find a particular interest.

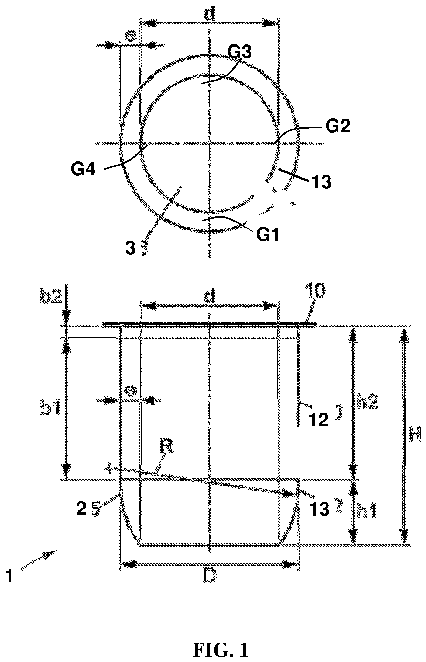

As shown in Figure 1, the article is preferably a container 1 having a thermoformed part, typically in the form of a hollow body 2, and optionally one or more flanges, for instance an annular flange 10. The hollow body 2 is a thermoformed part that is preferably provided with a continuously rounded section, preferably a circular section. Each flange 10 is typically a non-thermoformed part. In a particular embodiment the hollow body 12 comprises an annular side wall 2a presenting at least one part that is not covered by a banderole 18 or similar decorative strip.

The article can be thermoformed from a sheet having for example a thickness of higher than 300 µm, preferably at least 500 µm, preferably at least 750 µm, preferably from 750 to 1500 µm. The flange, if present in the article, typically has such a thickness.

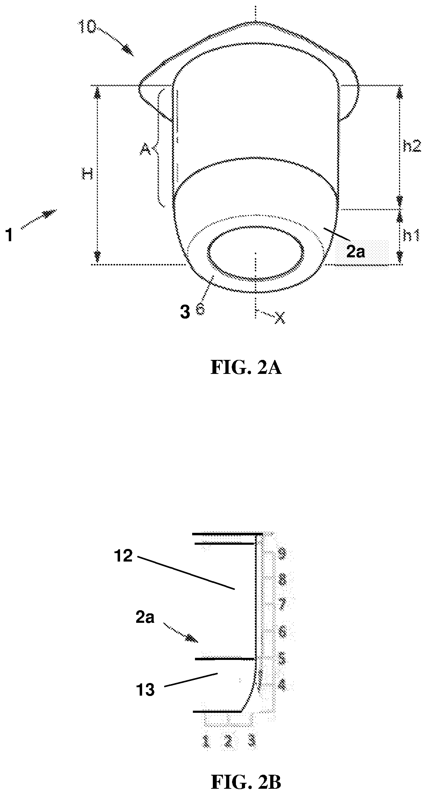

Referring to Figures 1 and 2A, the hollow body 2 of the container 1 has a side wall 2a extending along a longitudinal axis X from a bottom 3 to an open top. The side wall 2a of the body 2 is tubular and is adapted to be covered by a banderole, preferably a cylindrical banderole or a sticker in the upper area A adjacent to the axial opening 18. In the illustrated non-limitative embodiments, this axial opening is a circular opening 8. More generally, it is understood that the longitudinal axis X is here a central axis for the body 2 and the opening 8. Fixing of the banderole 18 is performed in a known manner.

Here, the container 1 comprises a generally planar annular flange 10 integral with the body 2 and connected to the top of the body 2. The flange 10 radially extends between an inner edge that defines the opening 8 and an outer edge that defines the perimeter of the flange 10. The side wall 2a of the body 2 has a generally cylindrical upper portion 12 directly connected to the flange 10 and a lower portion 13 tapering from the upper portion 12 toward the bottom 3, in a curved manner as clearly apparent in the Figure 1 and the Figure 2A.

It can be seen that the upper portion 12 and the lower portion 13 intersect and interconnect at a peripheral intersection line that is here circular. Between the substantially circular junction with the flange 10 and the also substantially circular peripheral intersection line, the upper area A defines a generally cylindrical surface for receiving the banderole 18. The banderole 18 may be added by an in-mold labelling method or the like. A small step or shoulder appropriate for maintaining the decorative strip can be present or absent on the side wall 2a at the peripheral intersection line. Such a step does not protrude more than about 0.5 mm from the cylindrical surface defined by the upper portion 12.

The peripheral intersection line is spaced and at a substantially constant distance from the planar bottom 3 as apparent in Fig. 2A and the height h1 of the lower portion 13 corresponds to a minoritary fraction of the height H of the container 1. It can be appreciated that the height H of the container 1 is larger than the larger size of the hollow body 2. Preferably, the height h2 of the upper portion 12 is not significantly larger than the outer diameter D of the cylindrical upper portion 12 and may be inferior to this outer diameter D as in the examples of Figs 1 and 2A-2B for instance. According to any point of view around the container 1, the upper area A can be seen as close to a squared shape, the height h2 of the upper portion 12 being slightly inferior (from max. 15%), equal or not exceeding from more than 10-15% the inner diameter of the opening 8 and/or the outer diameter D or similar apparent width of the body 2. With such an arrangement, the upper portion 12 is particularly useful for displaying information and is typically covered by a rectangular banderole or similar shaped strip arranged in a form of a sleeve label.

Accordingly, the body 2 is higher than wide essentially because of the significant height h1 of the lower portion 13. As this height h1 is significant and for instance comprised between 14 and 24 mm (the height H being for instance not superior to about 65 or 75 mm), the rounded aspect near the bottom 3 is clearly apparent. The lower portion 13 is here continuously rounded from the bottom 3 to the peripheral intersection line.

Referring to Figures 1 and 2A, the determined area A for attachment of a banderole 18 may have a height b1 not superior to the height h2 of the upper portion 12. An optional small gap thus may exist between the flange 10 and the upper edge, here a rectilinear edge, of the banderole. Here the distance b2 from the flange 10 may be about 1-4 mm only. In the illustrated embodiments, the lower edge of the banderole 18 does not extend below the peripheral intersection line so that the lower potion 13 remains uncovered.

The height h2 of the upper portion 12 (of course the height h2 is obtained with h2 = H - h1), which is here constant, may represent a fraction of the height H at least equal to 0.6 and not superior to 0.86. The height h1 of the lower portion 13 is thus inferior to a fraction of about 2/5 of the height H. The ratio h1/H may thus be comprised between 0.14 and 0.4. A ratio h2/H comprised between 2:3 and 4:5 and preferably inferior or equal to 3:4 may be chosen. As a result, the rounding of the lower portion 13 is obtained with a soft transition, i.e. with a large radius of curvature R as shown in Figure 1 and the mechanical properties near the bottom 3 are good without having any specific increase of thickness in the area adjacent the bottom 3. The good mechanical properties such as compression resistance in particular, allow use of a relatively low thickness near the bottom 3 (in the uncovered lower portion 13). The plastic material, comprising the specific combination of polylactic acid and at least one mineral filler, is particularly efficient to form the thermoformed part having a low range of thickness.

In food packaging industry, the plastic containers 1 can be stacked on top of one another so as to form stacks which can be layered on a pallet. A loading weight on a pallet may be much more than 500 kg. Such stacks allow the packaging items at the bottom to withstand the compressive load of the packaging items on top. Accordingly, it is of great interest that the uncovered lower portion 13 (not strengthened in any manner) may withstand high compression. Advantageously, the section of the lower portion 13 is circular as apparent in the top of Figure 1. More generally, the hollow body 2 may be provided with a circular section, the upper portion 12 having an outer diameter D.

Still referring to Figures 1 and 2A, a good compromise between the height of the upper portion 12 and the height of the lower portion 13, in particular for saving plastic material, is obtained when using a ratio h1/H of 0.25-0.27 or 0.27-0.29 or 0.29-0.31. A ratio h1/H superior to 0.2 is preferred to have a less pronounced angle at the junction between the lower portion 32 and the bottom 3. A ratio h1/H not superior to 0.32 is also preferred to have an upper area A sufficient. Furthermore, it is advantageous having a relatively large upper area A at least because a reduction of thickness can be here essentially obtained in the upper portion 30 of the body 2.

Now referring to Figure 2A, the bottom 3 may be provided with a recess or cavity with a concavity oriented to the exterior. The annular portion of the bottom 3, defined around this cavity, has a diameter inferior to the diameter of the circular opening 8 defined at the top of the body 2. The bottom 3 provided with such cavity, preferably a single centered cavity, has a higher strength for better supporting a compression load. Of course, the bottom 3 may still be considered as a generally planar bottom 3, at least because the bottom 3 has a flat shape and the container 1 is adapted to be maintained vertically when the bottom 3 is in contact with a horizontal base support (the longitudinal axis X being vertical). Of course, the height of the cavity is preferably very small, for instance about 0.5 mm.

Referring to Figure 1, the upper portion 12 can be seen as cylindrical, thus defining a substantially vertical wall of height h2. Substantially vertical is understood with a tolerance angle of 5° compared to vertical. In the examples shown the upper portion 12 cannot be considered as significantly larger at the top of the body 2 because an angle of less than 2° and for instance of about 1° only is defined with respect to the vertical direction of the longitudinal axis X. This angle is so small that the user will naturally interpret the upper portion 12 as being cylindrical. It can also be appreciated that the outer diameter D of the upper portion 12 can be considered as constant because this angle is typically less than 2° and the height h2 of the upper portion 12 is typically inferior to 50-70 mm. It will thus be understood that D also represents the outer diameter of the peripheral intersection line.

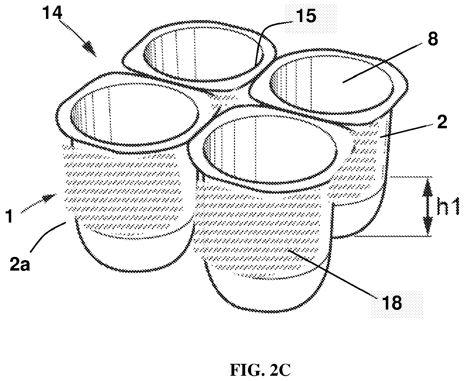

Referring to Figures 1, 2A and 2C, the side wall 2a of the body 2 has a generally circular section in cross-section both in the upper portion 12 and in the lower portion 13. In the upper portion 12, generally circular is understood as encompassing circles and ovals with a ratio between the large dimension in cross section and the small dimension in cross section is less than 1.1.

Now referring to Figure 1, it can be seen that the upper portion 12 determines an imaginary tube, here an imaginary cylinder, extending longitudinally around said longitudinal axis X and having the outer diameter D. Because of the curved shape of the tapered lower portion 13, the bottom 3 of the body 2 has a rounded outer edge that is radially spaced apart from the imaginary tube to define a substantially constant radial distance e between the rounded outer edge and the imaginary tube. The curved shape of the lower portion 13 is obtained with a relatively large radius of curvature R so that the radial distance e is significantly inferior to the half of the diameter d of the bottom 3. Accordingly, the bottom 3 is sufficiently wide to provide a good vertical stability of the container 1 when placed onto a horizontal support. Preferably, the following relation 0.8 < d/D < 0.9 is satisfied in order to have a stable bottom 3. The ratio e/h1 is comprised between 1/6 and 1/3 and preferably between 1/5 and 3/10 (and more preferably inferior to 0.29). With such a configuration, a slight curvature of the lower portion 13 is obtained and the lower portion 12 provides an additional surface for correctly gripping the container 1. It will be noted that increasing the stretching ratio for the side wall 2a is not something easy to perform when having a relatively thin side wall 2a, especially in the upper portion 12.

Referring to Figure 1, in order to have good mechanical properties in the lower portion 13 and having efficient stability of the container 1, the radial distance e may be comprised between 3 and 7 mm.

### Containers

The article can be a container, for example a container 1 used as a dairy product container, like a yogurt cup. The invention also concerns the container 1 filled with a food or non-food product, preferably a dairy product, preferably a milk-based (milk being an animal milk or a vegetal milk substitute such as soy milk or rice milk etc....) product, preferably a fermented dairy product, for example a yogurt. The container 1 can have a yogurt cup shape, for example with a square cross section or a square with rounded corners cross section, or round cross section. The container 1 can have a tapered bottom, preferably a tapered rounded bottom. The container 1 has walls (perpendicular to the cross section), typically a tubular side wall 2a, that can be provided with elements such as stickers or banderoles 18. Elements such as banderoles 18 can contribute to re-enforcing the mechanical resistance of the container.

The container 1 filled with a food or non-food product may comprise a closure element to seal the opening 8. A flange 10 defines a support surface for attachment of the closure element to the containing part of the container 1. The closure element remains above and at a distance from the side wall 2a. A membrane seal or thin foil, optionally suitable for food contact, may form the closure element. When the container 1 is provided with a flange 10, the closure element may have the same general cut as the flange.

The container 1 can be for example a container of 50 ml (or 50 g), to 1 L (or 1 kg), for example a container of 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 250 ml (or 250 g) to 300 ml (or 300 g), or 300 ml (or 300 g) to 500 ml (or 500 g), or 500 ml (or 500 g) to 750 ml (or 750 g), or 750 ml (or 750 g) to 1 L (or 1kg).

### Process

The article can be obtained by thermoforming a plastic sheet made of the material. A typical process of making the article comprises the steps of:
a) providing a plastic sheet in the material,
b) thermoforming at least a part of the plastic sheet such that the thermoformed part comprises at least one zone wherein the local stretch ratio is of at least 4.2, preferably at least 4.5, preferably at least 5, preferably at least 6, preferably at least 7.

Preferably thermoforming is performed with a total stretch ratio of at least 2.5, preferably at least 3, preferably at least 4, preferably at least 5.

In preferred embodiments the sheet has a thickness of higher than 300 µm, preferably at least 500 µm, preferably at least 750 µm, preferably from 750 µm to 1500 µm.

The material can be prepared before forming the sheet or during the formation of the sheet. Thermoplastic materials, such as PLA, can be introduced in the form of powder, pellets or granules.

Typically the process comprises a step of providing the polylactic acid, for example by mixing a first polylactic acid polymer and a second polylactic acid polymer and optionally further additives. These can be mixed upon forming the sheet, typically in an extruder.

In a preferred embodiment one uses an extruded sheet. Multi-layer sheets can be co-extruded, typically from the corresponding materials in a molten form. Co-extrusion processes are known from the one skilled in the art. These typically involve extruding separates flows through separates side by side dies. Beyond the dies the flows merge and form at least one interface. There is one interface for two-layer articles and two interfaces for three-layer articles. The materials are then cooled to form a solid article.

One can implement appropriate treatments after the extrusion or co-extrusion in order to obtain the desired product, for example a sheet. Treatment steps are for example press treatments, calendering, stretching etc... Parameters of these treatment steps such as temperatures, pressure, speed, number of treatments can be adapted to obtain the desired product, for example a sheet. In one embodiment the sheet is prepared by a process involving extruding or co-extruding and calendering. Treatments can provide some orientation to the sheet. Preferably the sheet is slightly mono-oriented. Typically the sheet is not a bi-oriented sheet or film.

Thermoforming is a known operation. One can thermoform the sheet so as to obtain the final product of the desired shape. It is mentioned that some stretching occurs upon thermoforming. Local stretching ratios of at least 4.2, preferably at least 4.5, preferably at least 5, preferably at least 6, preferably at least 7 are considered as quite high ratios, corresponding to deep thermoforming. Total stretching ratios of at least 2.5, preferably at least 3, preferably at least 4, preferably at least 5 are considered as quite high ratios, corresponding to deep thermoforming. The higher the ratio is, the deeper the thermoforming is, the more difficult the control is. The total stretching ratio can be for example of from 2.5 to 8.0, preferably between 3.0 to 7.0, preferably between 4.0 to 6.5. The article can present some local stretching ratios of from 2.5 to 10.0, for example of from 2.5 to 4 and/or from 4 to 6 and/or from 6 to 8 and/or from 8 to 10.

Thermoforming may be for example performed thanks to a Form Fill Seal thermoforming line. The thermoforming can present the following steps:
- sheet introduction on guide chains (i.e. spike or jaws);
- sheet heating, by heating contact plates;
- forming thanks to a negative mold, assisted by forming plugs and air pressure. The mold may comprise or not a label for example a banderole 18. The banderole 18 can be a partial banderole positioned only in the top of the mold, to obtain an article that is covered by the banderole 18 on the upper portion 12 of the body 2 or similar upper area of the thermoformed part, and not covered by the banderole 18 in a lower portion 13. In a Form Fill Seal thermoforming line, one typically performs the following steps after the thermoforming:
- the resulting forms are filled with a product, and then, thermosealed with a lid film,
- finally, they are cut and optionally precut by one or several mechanical trimming tool(s).

### Examples

In the example le letter c indicates a comparative example.

The examples are implemented with using the following materials:
- PLA 1: Ingeo® 2003D marketed by NatureWorks - Polylactic acid comprising 96.3% of L-Lactide units and 3.7% of D-Lactide units
- PLA 2: Ingeo® 4060D marketed by NatureWorks - Polylactic acid comprising 87% of L-Lactide units and 13% of D-Lactide units
- Impact modifier 1 (IM1): Masterbatch of 50% by weight of PLA 1 and 50% of Biostrength® 150, marketed by Arkema

### Example 1 - Plastic sheets

Various mono-layer PLA plastic sheets are prepared according to the procedure below.

Procedure: The materials (PLA 1, PLA 2 and Impact Modifier 1) are extruded with a Fairex extruder having an internal diameter of 45 mm and a 24D length. The temperature along the screw is comprised between 180 and 200°C. The molten PLA is extruded through a die with temperature comprised between 185 and 195°C to produce a compact sheet. The sheet is then calendered on 3 rolls that get a temperature of 40°C to control the thickness. Table I below presents compositions of the various sheets (contents are provided by weight, as masterbatch or as Impact Modifier active).

**Table I**

| | PLA composition | % D-Lactide in PLA | PLA1 +PLA2 | Impact modifier (as masterbatch) | PLA Content (by weight) | Impact modifier content (as active) | Sheet thickness |
|---|---|---|---|---|---|---|---|
| Example 1.1c | 100% PLA1 | 3.7% | 98% | IM1 - 2% | 99% | 1% | 1050 µm |
| Example 1.2c | 100% PLA1 | 3.7% | 98% | IM1 - 2% | 99% | 1% | 900 µm |
| Example 1.3 | 76% PLA1 | 5.9% | 98% | IM1 - 2% | 99% | 1% | 900 µm |
| | 24% PLA2 | | | | | | |
| Example 1.4 | 75% PLA1 | 6.0% | 98% | IM1 - 2% | 99% | 1% | 1050 µm |
| | 25% PLA2 | | | | | | |
| Example 1.5 | 65% PLA1 | 7.0% | 98% | IM1 - 2% | 99% | 1% | 900 µm |
| | 35% PLA2 | | | | | | |

### Example 2 - Yogurt cups

The plastic sheets of example 1 are thermoformed into yogurt cups according to the procedure below. The cups are then analyzed and evaluated.

### Procedure:

The sheet is introduced into a F.F.S. thermoforming line and is then thermoformed in 125 g cups with the following parameters:
- Heating plates temperatures: 110°C;
- The sheet is gradually heated thanks to six heating steps, each of the heating boxes having a closing time of 140ms;
- The thermoforming step is performed with conventional felt forming plugs;
- Mold temperature is fixed at 40°C to activate the label hot melt and to cool down the PLA material;
- Forming air pressure: 4.5 bars;
- Blowing time: 450 ms
- Machine speed: 32 strokes per minute.
- Distance between bottom of mold and plug at lowest point: Reported in table II below
- Shape: As shown on Figure 1. The total stretching ratio is 5.6.
- Banderole: a partial banderole, as shown on figure 2A, made of a paper-based complex having a thickness of about 100 µm and a weight of about 100g/m², applied in the mold solely for the cups evaluated for topload and for banderole adhesion.

The yogurt cups 1 are arranged in a pack 14 of 4 attached cups in two rows (the pack being also referred to as a "multipack") and are cut into x4 attached cups (referred to as "multipack"), with a precut line 15 or similar junction between each pair of adjacent cups amongst the four cups, as in the example shown in Figure 2C. The precut lines 15 are performed on the F.F.S. equipment.

**Table II**

| | Sheet | % D-Lactide in PLA | Sheet thickness | Plug Distance |
|---|---|---|---|---|
| Example 2.1c | Example 1.1c | 3.7% | 1050 µm | 10 mm |
| Example 2.2c | Example 1.2c | 3.7% | 900 µm | 5 mm |
| Example 2.3c | Example 1.2c | 3.7% | 900 µm | 7 mm |
| Example 2.4 | Example 1.3 | 5.9% | 900 µm | 5 mm |
| Example 2.5 | Example 1.3 | 5.9% | 900 µm | 7 mm |
| Example 2.6 | Example 1.4 | 6.0% | 1050 µm | 10 mm |
| Example 2.7 | Example 1.5 | 7.0% | 900 µm | 5 mm |
| Example 2.8 | Example 1.5 | 7.0% | 900 µm | 9 mm |

### Evaluations and Analysis

The thickness profile along a bottom to top line is measured at various equal zones 1 to 9 (here regularly spaced) as shown on figure 2B. This is done along for several lines radially along the perimeter, said lines being referred to as G1 to G4 as apparent in Figure 1 (four lines, orientated at 90° when viewed from the bottom).It can be seen that G3 extends in the opposite direction with respect to G1 and G4 extends in the opposite direction with respect to G2. The zone 1 is at or proximal with respect to a central part of the bottom 3. The thickness profiles and local stretch ratios are reported in table III.

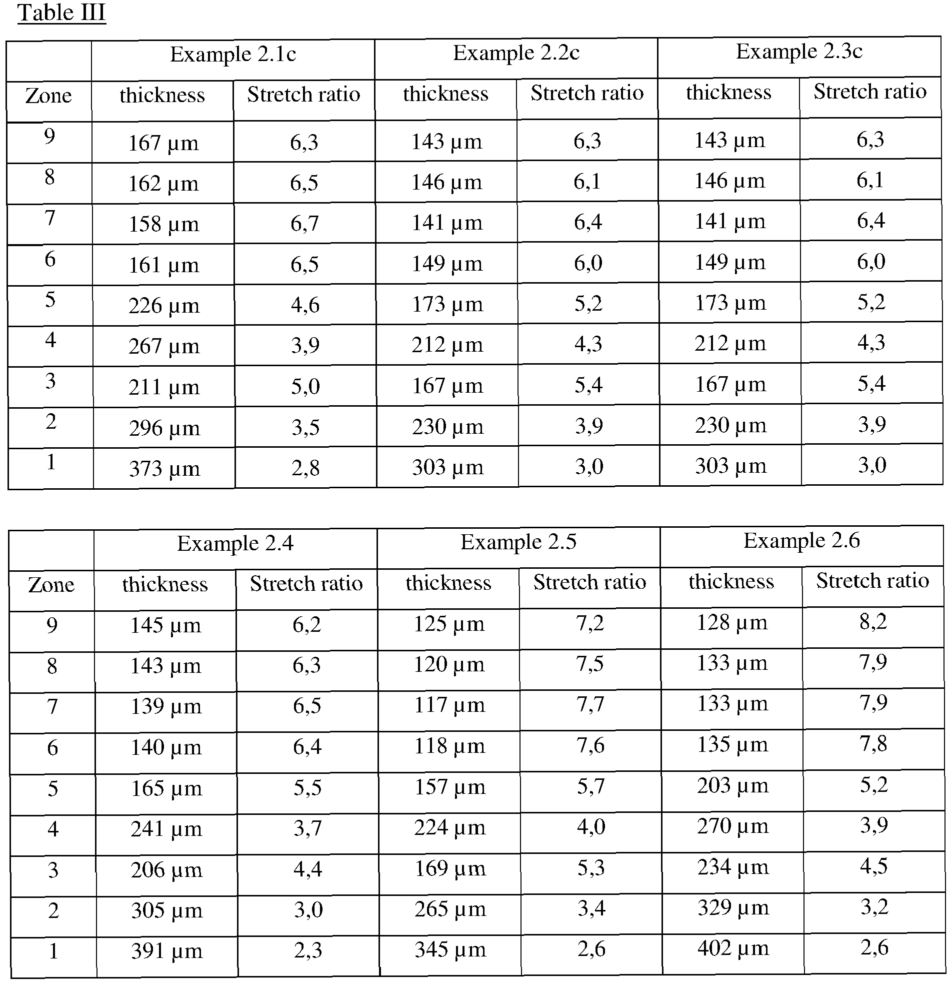

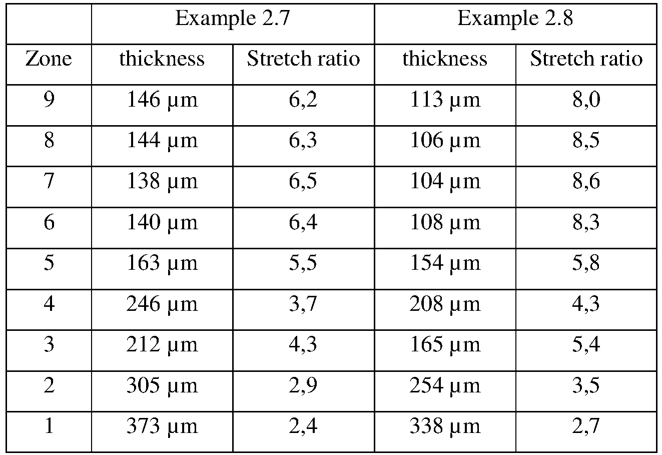

### Top Load evaluation

Yogurt cups mechanical performances are determined by compression tests referred as Top Load. The Top Load value is evaluated according to the following protocol, and reported on table IV below:
- Use of a tensile/compression test machine type ADAMEL LHOMARGY DY 34
- Apply compression on cups (by 4 cups) with a speed of 10mm/min at ambient temperature
- Evaluate top load value as: maximum of compression curve.

**Table IV**

| | % D-Lactide in PLA | Sheet thickness | Plug Distance | Top Load |
|---|---|---|---|---|
| Example 2.1c | 3.7% | 1050 µm | 10 mm | 74,20 daN |
| Example 2.3c | 3.7% | 900 µm | 7 mm | 67,90 daN |
| Example 2.5 | 5.9% | 900 µm | 7 mm | 81,50 daN |
| Example 2.6 | 6.0% | 1050 µm | 10 mm | 86,10 daN |
| Example 2.8 | 7.0% | 900 µm | 9 mm | 78,70 daN |

These results show that increasing the amount of D-Lactide units provides increased mechanical performance.

### Homogeneity - Thermoforming control

The standard deviations when considering the several lines G1 to G4 are measured at the various zones 1 to 9. Table V below reports the average standard deviation for all zones 1 to 9, as well as the standard deviation at zones 4 and 5.

**Table V**

| | % D-Lactide in PLA | Sheet thickness | Plug Distance | Stretch ratio at zone 4 | Standard Deviation at zone 4 | Stretch ratio at zone 5 | Standard Deviation at zone 5 | Average Standard Deviation |
|---|---|---|---|---|---|---|---|---|
| Example 2.1c | 3.7% | 1050 µm | 10 mm | 3.9 | 25 µm | 4.6 | 50 µm | 14 µm |
| Example 2.2c | 3.7% | 900 µm | 5 mm | 4.3 | 30 µm | 5.2 | 39 µm | 12 µm |
| Example 2.4 | 5.9% | 900 µm | 5 mm | 3.7 | 13 µm | 5.5 | 14 µm | 8 µm |
| Example 2.6 | 6.0% | 1050 µm | 10 mm | 3.9 | 16 µm | 5.2 | 28 µm | 9 µm |
| Example 2.7 | 7% | 900 µm | 5 mm | 3.7 | 13 µm | 5.5 | 13 µm | 6 mm |

As homogeneity increases with standard deviation decreases, this shows that increasing the amount of D-Lactide units provides increased homogeneity, including in zones proximal to the bottom such as zones 4 and 5, that are most sensitive, especially for cups partially covered by a banderole. It's found that inhomogeneity can be very high in such sensitive zones at low content of D-Lactide units and high local stretch ratios and that increasing the content of D-Lactide units allows decreasing the inhomogeneity even upon increasing the local stretch ratio.

### Example 3: Banderole adhesion

Partially banderoled cups are prepared from the sheet of example 1.2c and from the sheet of example 1.3ac cording to the procedure of example 2, but with the blowing times of 350 ms and 550 ms, and with a plug distance of 7 mm.

The adhesion of the banderole is evaluated visually and reported in table VI below:

**Table VI**

| | Sheet | % D-Lactide in PLA | Blowing time 350 ms | Blowing time 550 ms |
|---|---|---|---|---|
| Example 3.1c | Example 1.2c | 3.7% | Not Good (Shrinkage) | Good |
| Example 3.2 | Example 1.3 | 5.9% | Good | Good |

This shows that the presence of D-Lactide allows:
- a reduction of blowing time, and thus a higher productivity, and
- a better banderole adhesion.

## Claims

1. An article in a material comprising polylactic acid, said article comprising a thermoformed part, wherein:
- the material comprises polylactic acid having D-Lactide units and L-Lactide units, as a copolymer and/or blend, with a ratio between D-Lactide units and L-Lactide units of from 5/95 to 10/90,
- the thermoformed part comprises at least one zone wherein the local stretch ratio is of at least 5, preferably at least 6, preferably at least 7.

2. The article according to claim 1, wherein the thermoformed part has a total stretch ratio of at least 2.5, preferably at least 3, preferably at least 4, preferably at least 5.

3. The article according to any of the preceding claims, wherein the thermoformed part has a thickness varying in a range of from 60µm to 750 µm, preferably from 70 µm to 500 µm,

4. The article according to any of the preceding claims, being a container (1) having a hollow body (2) and optionally at least one flange (10), the hollow body defining said thermoformed part, the hollow body being provided with an opening (8).

5. The article according to claim 4, wherein the hollow body (2) is at least partially covered by a banderole.

6. The article according to any of claims 4 or 5, wherein the hollow body (2) comprises:
- a bottom (3) at the opposite from the opening (8),
- a side wall (2a) presenting at least a portion, preferably a lower portion (13), that is not covered by a banderole (18).

7. The article according to claim 6, wherein said opening (8) is a circular opening and the bottom (3) has a circular outer edge.

8. The article according to any of claims 6 or 7, wherein the side wall (2a) has a cylindrical upper portion (12) having a height h2 and a lower portion (13) having a height h1, tapering from the upper portion toward the bottom (3) in a curved manner, the upper portion and the lower portion intersecting and interconnecting at a peripheral intersection line.

9. The article according to claim 8, wherein the bottom (3) is a planar bottom, and wherein the peripheral intersection line is spaced at a constant distance from the planar bottom, the lower portion (13) having a height h1 corresponding to a minoritary fraction of the height H of the container (1).

10. The article according to claim 9, wherein the height h2 of said upper portion (12) is constant, the ratio h2/H being comprised between 3:5 and 6:7, and preferably between 2:3 and 4:5.

11. The article according to claim 10, wherein the ratio h2/H is inferior or equal to 3:4.

12. The article according to any of claims 8 to 11, wherein the side wall (2a) has a thickness profile such that the average thickness of the lower portion (13) is superior to the average thickness of the upper portion (12).

13. The article according to any of claims 8 to 12, wherein said opening (8) has an inner diameter which is inferior to the height H of the container (1) and superior to the height h1 of the lower portion (13).

14. A process of making an article according to any of the preceding claims comprising the steps of:
a) providing a plastic sheet in the material,
b) thermoforming at least a part of the plastic sheet such that the thermoformed part comprises at least one zone wherein the local stretch ratio is of at least 5, preferably at least 6, preferably at least 7.

15. A process according to claim 14, wherein thermoforming is performed with a total stretch ratio of at least 2.5, preferably at least 3, preferably at least 4, preferably at least 5.

16. The process according to any of claims 14 or 15, wherein the plastic sheet has a thickness of higher than 300 µm, preferably at least 500 µm, preferably at least 750 µm, preferably from 750 µm to 1500 µm.

## Patentansprüche

1. Gegenstand aus einem Material, umfassend Polymilchsäure, wobei der Gegenstand ein thermogeformtes Teil umfasst, wobei:
- das Material Polymilchsäure mit D-Lactid Einheiten und L-Lactid Einheiten als ein Copolymer und / oder eine Mischung mit einem Verhältnis zwischen D-Lactid Einheiten und L-Lactid Einheiten von 5/95 bis 10/90 umfasst,
- das thermogeformte Teil mindestens eine Zone umfasst, in der das lokale Streckverhältnis mindestens 5, vorzugsweise mindestens 6, vorzugsweise mindestens 7 ist.

2. Gegenstand nach Anspruch 1, wobei das thermogeformte Teil ein Gesamtstreckverhältnis von mindestens 2,5, vorzugsweise mindestens 3, vorzugsweise mindestens 4, vorzugsweise mindestens 5 aufweist.

3. Gegenstand nach einem der vorhergehenden Ansprüche, wobei das thermogeformte Teil eine Dicke aufweist, die in einem Bereich von 60 µm bis 750 µm, vorzugsweise von 70 µm bis 500 µm variiert.

4. Gegenstand nach einem der vorhergehenden Ansprüche, der ein Behälter (1) mit einem Hohlkörper (2) und gegebenenfalls mindestens einem Flansch (10) ist, wobei der Hohlkörper das thermogeformte Teil definiert, wobei der Hohlkörper mit einer Öffnung (8) bereitgestellt ist.

5. Gegenstand nach Anspruch 4, wobei der Hohlkörper (2) mindestens teilweise von einer Banderole bedeckt ist.

6. Gegenstand nach einem der Ansprüche 4 oder 5, wobei der Hohlkörper (2) umfasst:
- einen Boden (3) gegenüber der Öffnung (8),
- eine Seitenwand (2a), die mindestens einen Teil, vorzugsweise einen unteren Teil (13), bietet, der nicht von einer Banderole (18) bedeckt ist.

7. Gegenstand nach Anspruch 6, wobei die Öffnung (8) eine kreisförmige Öffnung ist und der Boden (3) eine kreisförmige äußere Kante aufweist.

8. Gegenstand nach einem der Ansprüche 6 oder 7, wobei die Seitenwand (2a) einen zylindrischen oberen Teil (12) mit einer Höhe h2 und einen unteren Teil (13) mit einer Höhe h1 aufweist, wobei sie sich von dem oberen Teil in Richtung des Bodens (3) in einer gebogenen Weise verjüngt, wobei sich der obere Teil und der untere Teil an einer peripheren Schnittlinie schneiden und miteinander verbinden.

9. Gegenstand nach Anspruch 8, wobei der Boden (3) ein ebener Boden ist und wobei die periphere Schnittlinie in einem konstanten Abstand von dem ebenen Boden angeordnet ist, wobei der untere Teil (13) einer Höhe h1 aufweist, die einem Minderheitsbruchteil der Höhe H des Behälters (1) entspricht.

10. Gegenstand nach Anspruch 9, wobei die Höhe h2 des oberen Teils (12) konstant ist, wobei das Verhältnis h2/H zwischen 3: 5 und 6: 7 und vorzugsweise zwischen 2: 3 und 4: 5 umfasst ist.

11. Gegenstand nach Anspruch 10, wobei das Verhältnis h2/H kleiner oder gleich 3: 4 ist.

12. Gegenstand nach einem der Ansprüche 8 bis 11, wobei die Seitenwand (2a) ein solches Dickenprofil aufweist, dass die durchschnittliche Dicke des unteren Teils (13) der durchschnittlichen Dicke des oberen Teils (12) überlegen ist.

13. Gegenstand nach einem der Ansprüche 8 bis 12, wobei die Öffnung (8) einen Innendurchmesser aufweist, der der Höhe H des Behälters (1) unterlegen ist und der Höhe h1 des unteren Teils (13) überlegen ist.

14. Verfahren zum Herstellen eines Gegenstands nach einem der vorhergehenden Ansprüche, umfassend die Schritte:
a) Bereitstellen einer Kunststoffplatte aus dem Material,
b) Thermoformen von mindestens einem Teil der Kunststoffplatte, so dass das thermogeformte Teil mindestens eine Zone umfasst, in der das lokale Streckverhältnis mindestens 5, vorzugsweise mindestens 6, vorzugsweise mindestens 7 ist.

15. Verfahren nach Anspruch 14, wobei das Thermoformen mit einem Gesamtstreckverhältnis von mindestens 2,5, vorzugsweise mindestens 3, vorzugsweise mindestens 4, vorzugsweise mindestens 5 durchgeführt wird.

16. Verfahren nach einem der Ansprüche 14 oder 15, wobei die Kunststoffplatte eine Dicke von mehr als 300 µm, vorzugsweise mindestens 500 µm, vorzugsweise mindestens 750 µm, vorzugsweise von 750 µm bis 1500 µm, aufweist.

## Revendications

1. Article en un matériau comprenant du poly(acide lactique), ledit article comprenant une partie thermoformée, dans lequel :
- le matériau comprend du poly(acide lactique) comportant des motifs D-lactide et des motifs L-lactide, sous forme d'un copolymère et/ou d'un mélange, avec un rapport entre les motifs D-lactide et les motifs L-lactide de 5/95 à 10/90,
- la partie thermoformée comprend au moins une zone dans laquelle le taux local d'étirage est d'au moins 5, de préférence d'au moins 6, de préférence d'au moins 7.

2. Article selon la revendication 1, dans lequel la partie thermoformée a un taux total d'étirage d'au moins 2,5, de préférence d'au moins 3, de préférence d'au moins 4, de préférence d'au moins 5.

3. Article selon l'une quelconque des revendications précédentes, dans lequel la partie thermoformée a une épaisseur variant dans une plage de 60 µm à 750 pm, de préférence de 70 µm à 500 µm.

4. Article selon l'une quelconque des revendications précédentes, qui est un récipient (1) comportant un corps creux (2) et éventuellement au moins un rebord (10), le corps creux délimitant ladite partie thermoformée, le corps creux étant pourvu d'une ouverture (8).

5. Article selon la revendication 4, dans lequel le corps creux (2) est au moins en partie recouvert d'une banderole.

6. Article selon l'une quelconque des revendications 4 ou 5, dans lequel le corps creux (2) comprend :
- un fond (3) à l'opposé de l'ouverture (8),
- une paroi latérale (2a) présentant au moins une partie, de préférence une partie inférieure (13), qui n'est pas recouverte par une banderole (18).

7. Article selon la revendication 6, dans lequel ladite ouverture (8) est une ouverture circulaire et le fond (3) a un bord externe circulaire.

8. Article selon l'une quelconque des revendications 6 ou 7, dans lequel la paroi latérale (2a) comporte une partie supérieure cylindrique (12) ayant une hauteur h2 et une partie inférieure (13) ayant une hauteur h1, à section décroissante de la partie supérieure vers le fond (3) d'une manière courbe, la partie supérieure et la partie inférieure se croisant et étant reliées l'une à l'autre au niveau d'une ligne d'intersection périphérique.

9. Article selon la revendication 8, dans lequel le fond (3) est un fond plan et dans lequel la ligne d'intersection périphérique est à une distance constante du fond plan, la partie inférieure (13) ayant une hauteur h1 correspondant à une fraction minoritaire de la hauteur H du récipient (1).

10. Article selon la revendication 9, dans lequel la hauteur h2 de ladite partie supérieure (12) est constante, le rapport h2/H étant compris entre 3:5 et 6:7 et de préférence entre 2:3 et 4:5.

11. Article selon la revendication 10, dans lequel le rapport h2/H est inférieur ou égal à 3:4.

12. Article selon l'une quelconque des revendications 8 à 11, dans lequel la paroi latérale (2a) a un profil d'épaisseur tel que l'épaisseur moyenne de la partie inférieure (13) est supérieure à l'épaisseur moyenne de la partie supérieure (12).

13. Article selon l'une quelconque des revendications 8 à 12, dans lequel ladite ouverture (8) a un diamètre interne qui est inférieur à la hauteur H du récipient (1) et supérieur à la hauteur h1 de la partie inférieure (13).

14. Procédé de fabrication d'un article selon l'une quelconque des revendications précédentes comprenant les étapes consistant à :
a) fournir une feuille de plastique en le matériau,
b) thermoformer au moins une partie de la feuille de plastique de façon telle que la partie thermoformée comprend au moins une zone dans laquelle le taux local d'étirage est d'au moins 5, de préférence d'au moins 6, de préférence d'au moins 7.

15. Procédé selon la revendication 14, dans lequel le thermoformage est effectué avec un taux total d'étirage d'au moins 2,5, de préférence d'au moins 3, de préférence d'au moins 4, de préférence d'au moins 5.

16. Procédé selon l'une quelconque des revendications 14 ou 15, dans lequel la feuille de plastique a une épaisseur supérieure à 300 µm, de préférence d'au moins 500 µm, de préférence d'au moins 750 µm, de préférence de 750 µm à 1500 µm.
